# EUROPEAN PATENT APPLICATION

(11) **EP 1 710 964 A1**
(43) Date of publication of application: **11.10.2006**
(21) Application number: 06112387.3
(22) Date of filing: 07.04.2006
(51) Int. Cl.: H04L 12/56

(54) **Method and apparatus for handling calls in a packet network**

(30) Priority: 07.04.2005 US 101135
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Asquith, Julian Peter

(57) **Abstract**

Method and apparatus for handling calls in a packet network is described. In one example, call requests are received at a network element. For each call request of the call requests: A dialed number associated with the call request is identified. A current number of calls established by the packet network for the dialed number is determined. The current number of established calls is compared to a threshold number of calls for the dialed number (e.g., a threshold call volume). The network element responds to the call request with a busy tone in response to the current number of calls exceeding the threshold. The call request is forwarded from the network element in response to the current number of calls satisfying the threshold.

## Description

### BACKGROUND OF THE INVENTION

### Field of the Invention

Embodiments of the present invention generally relate to telecommunications systems and, more particularly, to a method and apparatus for handling calls in the packet network.

### Description of the Related Art

Generally, telecommunications systems provide the ability for two or more people or machines (e.g., computerized or other electronic devices) to communicate with each other. A telecommunications system may include various networks for facilitating communication that may be generally organized into packet networks and circuit-switched networks. An exemplary circuit-switched network includes a plain old telephone system (POTS), such as the publicly switched telephone network (PSTN). Exemplary packet networks include internet protocol (IP) networks, asynchronous transfer mode (ATM) networks, frame-relay networks, and the like. One type of packet network is a voice-over-internet protocol (VOIP) network.

Enterprises typically make use of a call center to handle calls from customers. A "call center" includes agents, automatic call distributors, and servers for handling the calls. Most often, a customer reaches a call center by dialing a toll-free number (e.g., an 800 number) associated with a particular enterprise. Typically, providers of call centers will take access trunks out of service to busy out their ports when incoming calls and current call queues exceed the capacity of their call agents to handle in satisfactory time. In some cases, a single call center services multiple customers and thus employ shared access facilities. One customer of the call center may have sufficient coverage to handle all of their incoming calls, whereas another customer may not have sufficient coverage. If shared trunks are busied out to reduce long queues for one customer, then all customers sharing these facilities suffer blocked calls and potential loss of business. Accordingly, there exists a need in the art for an improved method and apparatus for handling calls in a packet network for call centers.

### SUMMARY OF THE INVENTION

Method and apparatus for handling calls in a packet network is described. In one embodiment, call requests are received at a network element. For each call request of the call requests: A dialed number associated with the call request is identified. A current number of calls established by the packet network for the dialed number is determined. The current number of established calls is compared to a threshold number of calls for the dialed number (e.g., a threshold call volume). The network element responds to the call request with a busy tone in response to the current number of calls exceeding the threshold. The call request is forwarded from the network element in response to the current number of calls satisfying the threshold.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication system in accordance with the invention;

FIG. 2 is a block diagram depicting an exemplary configuration of the communication system of FIG. 1 in accordance with the invention;

FIG. 3 is a flow diagram depicting an exemplary embodiment of a method for handling calls in a packet network in accordance with one or more aspects of the invention; and

FIG. 4 is a block diagram depicting an exemplary embodiment of a computer suitable for implementing the processes and methods described herein.

### DETAILED DESCRIPTION

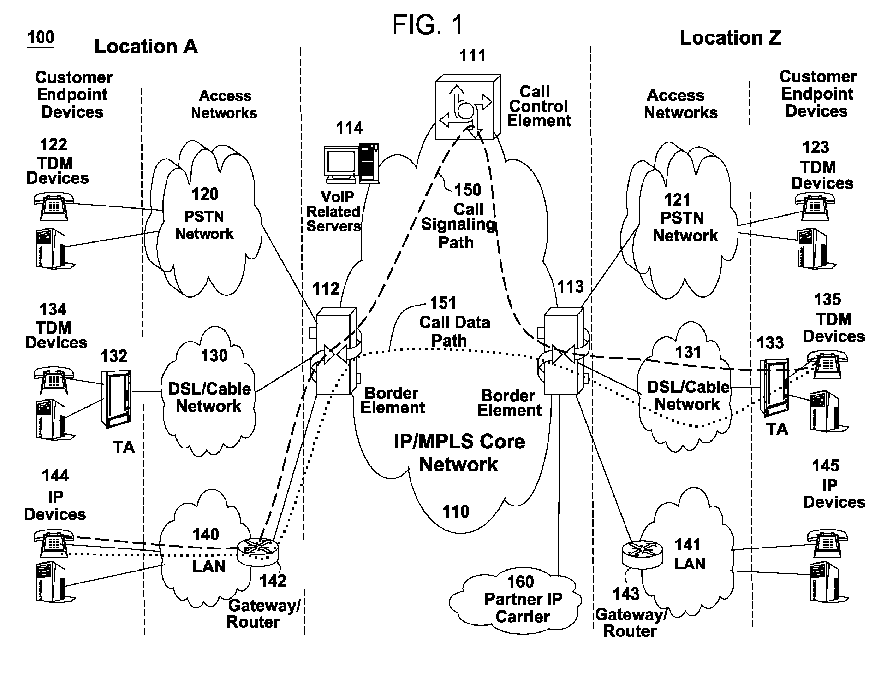

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

Referring to FIG. 1, the customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VoIP related servers 114. The BE resides at the edge of the VoIP core infrastructure and interfaces with customers endpoints over various types of access networks. BEs may also be referred to as "edge components." A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call data path 151 are illustratively shown in FIG. 1. Note that the call signaling path and the call data path are different because once a call has been setup up between two endpoints, the CCE 111 does not need to be in the data path for actual direct data exchange.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

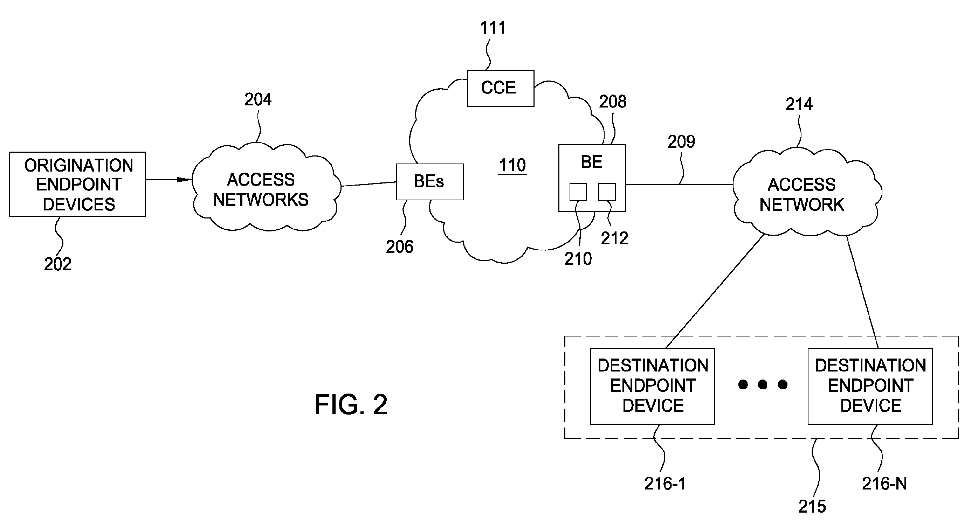

FIG. 2 is a block diagram depicting an exemplary configuration of the communication system of FIG. 1 in accordance with the invention. In the present embodiment, originating endpoint devices 202 are in communication with the core network 110 through access networks 204 and BEs 206. Call requests initiated by the originating endpoint devices 202 are received at the BEs 206 over the access networks 204 and are forwarded to the call control element (CCE) 111 for processing. In the present example, the call requests are destined for a call center 215 having destination endpoint devices 216-1 through 216-N (collectively referred to as destination endpoint devices 216), where N is an integer. Notably, each of the destination endpoint devices 216 is associated with a particular telephone number (e.g., a particular 800 number). The destination endpoint devices 216 are in communication with the core network 110 through an access network 214 and a BE 208. The BE 208 and the access network 214 are in communication over a shared access facility 209 (e.g., a shared trunk). The originating endpoint devices 202 and the destination endpoint devices 216 may comprise any of the customer endpoint devices described above (e.g., TDM devices, IP devices, PBX, etc.). The access networks 204 and 214 may comprise any of the access networks described above (e.g., PSTN, DSL/Cable, LAN, etc).

The CCE 111 forwards the call requests to the BE 208 for processing. The BE 208 includes a memory 210 and a processor 212. The memory 210 is configured to store a database of call thresholds associated with dialed numbers. That is, each dialed number serviced by the call center 215 has an associated call volume threshold. For a given call request, the processor 212 is configured to identify the dialed number associated therewith. The processor 212 may identify the dialed number associated with a call request using a dialed number identification service (DNIS) standard, for example. The processor 212 then determines the number of calls currently established for the dialed number. The processor 212 obtains the call volume threshold for the dialed number from the memory 210 and compares the current number of established calls to the threshold. If the current number of established calls exceeds the threshold, the processor 210 instructs the BE 208 to response to the call request with a busy tone. Otherwise, the processor 210 instructs the BE 208 to forward the call request over the shared access facility 209 to the access network 214 for receipt by the appropriate one of the destination endpoint devices 216.

In this manner, call centers hosted in a packet network, such as a VOIP network, have the ability to busy out specific calls on a shared trunk, while letting other calls on the shared trunk reach attendants. In one embodiment, an edge component in the VOIP network examines the dialed number (e.g., DNIS) of incoming traffic over a shared facility and when traffic reaches a certain threshold for the particular dialed number, the network sends a busy tone to callers. All other traffic is sent through for call setup and completion.

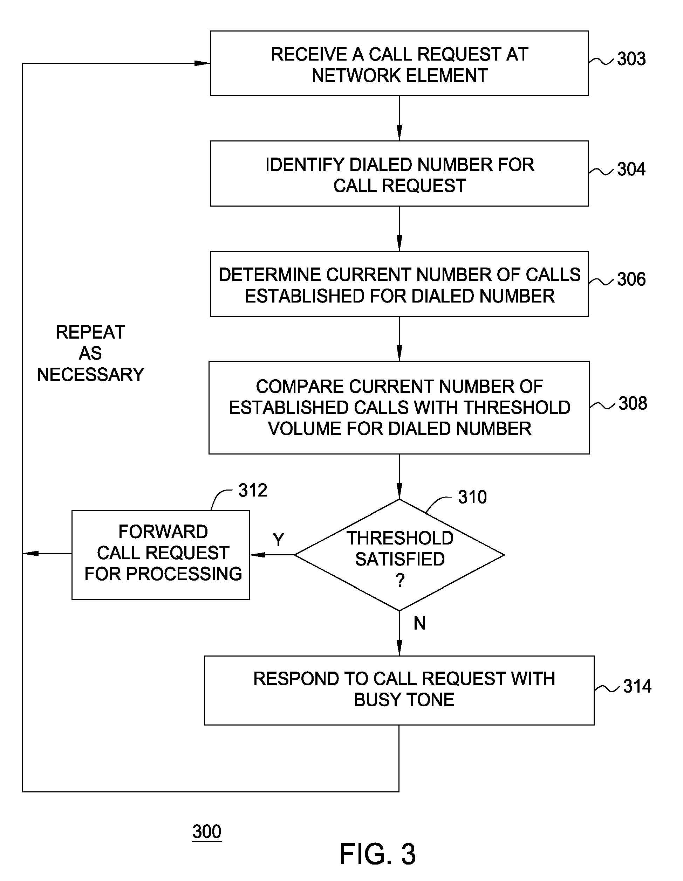

FIG. 3 is a flow diagram depicting an exemplary embodiment of a method 300 for handling calls in a packet network in accordance with one or more aspects of the invention. The method 300 begins at step 302, where a call request is received at a network element. For example, the call request may be received at an edge component of the packet network, such as a border element. At step 304, a dialed number is identified for the call request. For example, the dialed number may be identified using DNIS or like type number identification services. At step 306, a current number of calls established for the dialed number is determined. At step 308, the current number of established calls is compared with a threshold call volume associated with the dialed number. At step 310, a determination is made whether the threshold call volume is satisfied. If so, the method 300 proceeds to step 312, where the call request is forwarded for processing (e.g., the normal call setup process is performed, as described above). Otherwise, the method 300 proceeds to step 314, where the network element responds to the call request with a busy tone. The method 300 may be repeated as necessary for each call request received at the network element.

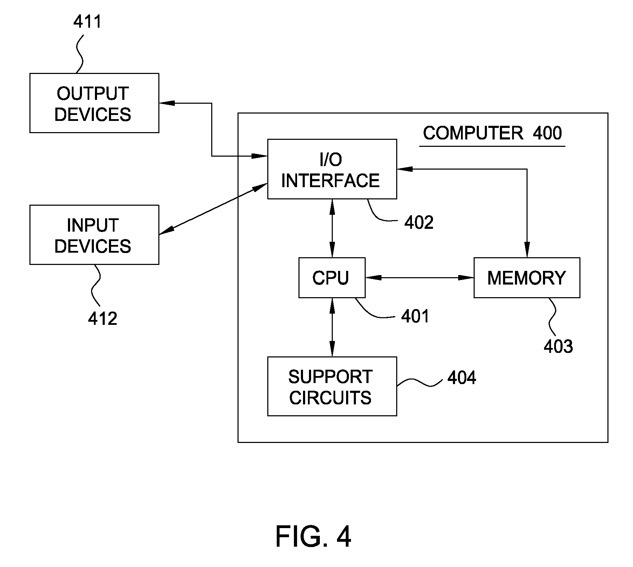

FIG. 4 is a block diagram depicting an exemplary embodiment of a computer 400 suitable for implementing the processes and methods described herein. The computer 400 includes a central processing unit (CPU) 401, a memory 403, various support circuits 404, and an I/O interface 402. The CPU 401 may be any type of microprocessor known in the art. The support circuits 404 for the CPU 401 include conventional cache, power supplies, clock circuits, data registers, I/O interfaces, and the like. The I/O interface 402 may be directly coupled to the memory 403 or coupled through the CPU 401. The I/O interface 402 may be coupled to various input devices 412 and output devices 411, such as a conventional keyboard, mouse, printer, display, and the like.

The memory 403 may store all or portions of one or more programs and/or data to implement the processes and methods described herein. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 400 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 403. The memory 403 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. A method of handling a call in a packet network, comprising:
receiving a call request at a network element;
identifying a dialed number associated with the call request;
determining a current number of calls established by the packet network for the dialed number;
comparing the current number of calls to a threshold number of calls for the dialed number;
responding to the call request with a busy tone if the current number of calls exceeds the threshold; and
forwarding the call request from the network element if the current number of calls satisfyies the threshold.

2. The method of claim 1, wherein the network element comprises an edge component of the packet network.

3. The method of claim 2, wherein the edge component comprises a border element.

4. The method of claim 1, wherein the dialed number is identified at the network element.

5. The method of claim 1, wherein the dialed number is identified using a dialed number identification service (DNIS) standard.

6. The method of claim 1, wherein the call request is forwarded from the network element over a shared access facility to a call center configured to service a plurality of dialed numbers.

7. The method of claim 1, wherein the packet network comprises a voice-over-internet protocol (VOIP) network.

8. Apparatus for handling a call in a packet network, comprising:
a network element for receiving a call request, the network element having:
a memory for storing thresholds for dialed numbers; and
a processor configured to identify a dialed number associated with the call request, determine a current number of calls established by the packet network for the dialed number, obtaining a threshold number of calls for the dialed number from the memory, comparing the current number of calls to the threshold, respond to the call request with a busy tone if the current number of calls exceeds the threshold, and forward the call request if the current number of calls satisfyies the threshold.

9. The apparatus of claim 8, wherein the network element comprises an edge component of the packet network.

10. The apparatus of claim 9, wherein the edge component comprises a border element.

11. The apparatus of claim 8, wherein the network element is configured to identify the dialed number using a dialed number identification service (DNIS) standard.

12. The apparatus of claim 8, wherein the network element is configured to forward the call request over a shared access facility to a call center configured to service a plurality of dialed numbers.

13. The apparatus of claim 8, wherein the packet network comprises a voice-over-internet protocol (VOIP) network.

14. A computer readable medium having stored thereon instructions that, when executed by a processor, cause the processor to perform a method of handling a call in a packet network, comprising:
receiving a call request at a network element;
identifying a dialed number associated with the call request;
determining a current number of calls established by the packet network for the dialed number;
comparing the current number of calls to a threshold number of calls for the dialed number;
responding to the call request with a busy tone if the current number of calls exceeds the threshold; and
forwarding the call request from the network element if the current number of calls satisfies the threshold.

15. The computer readable medium of claim 14, wherein the network element comprises an edge component of the packet network.

16. The computer readable medium of claim 15, wherein the edge component comprises a border element.

17. The computer readable medium of claim 14, wherein the dialed number is identified at the network element.

18. The computer readable medium of claim 14, wherein the dialed number is identified using a dialed number identification service (DNIS) standard.

19. The computer readable medium of claim 14, wherein the call request is forwarded from the network element over a shared access facility to a call center configured to service a plurality of dialed numbers.

20. The computer readable medium of claim 14, wherein the packet network comprises a voice-over-internet protocol (VOIP) network.
